# EUROPEAN PATENT SPECIFICATION

(11) **EP 2 202 251 B1**
(45) Date of publication and mention of the grant of the patent: **28.12.2011**
(21) Application number: 09180804.8
(22) Date of filing: 28.12.2009
(51) Int. Cl.: C08F 212/08, C08F 212/10, C08L 29/04

(54) **Vinyl acetate/vinyl 2-ethylhexanoate co-polymer binder resins**
Vinylacetat-/Vinyl-2-Ethylhexonoat-Copolymer-Binderharze
Résines de liaison de copolymère d'acétate de vinyle/2-éthylhexanoate de vinyle

(30) Priority: 29.12.2008 US 203752 P
(43) Date of publication of application: 30.06.2010
(73) Proprietor: Celanese Emulsions GmbH, 61476 Kronberg/Ts. (DE)
(72) Inventor: McLennan, Alistair John, 61462, Koenigstein (DE); Zeimentz, Peter M., 50667 Köln (DE); Laborda, Steve, 65719, Hofheim am Taunus (DE)
(74) Representative: von Kreisler Selting Werner

(56) References cited:
- FR-A1- 2 154 638
- FR-A1- 2 207 150

## Description

### Claim for Priority

This application is based on United States Provisional Patent Application Serial No. 61/203,752 entitled Vinyl Acetate Co-Polymers and Uses Thereof filed on December 29, 2008. The priority of United States Provisional Patent Application Serial No. 61/203,752 is hereby claimed and its disclosure incorporated by reference into this application.

### Field of the Invention

This invention relates, in part, to the preparation of novel polymers comprising vinyl acetate, vinyl esters of α-monosubstituted fatty acids, such as vinyl 2-ethylhexanoate, and functional monomers, including self-crosslinking monomers such as N-methylol(meth)acrylamide. The polymers are typically emulsion polymers and may optionally contain one or more additional comonomers selected from, for example, ethylene and/or alkyl (meth)acrylate. Such polymers have utility in a variety of applications including as binders for use in fibrous products.

### Background of the Invention

The use of vinyl acetate containing aqueous copolymers as binders for bonding and coating fiber structures generally such as woven fabrics, nonwovens and waddings of textile fiber or textile yarns is known. Copolymers of vinyl ester copolymers which comprise self-crosslinking comonomer units with N-methylol or N-methylol ether functions to improve their strength are often used. Up to 10% by weight of N-methylol(meth)acrylamide (NMA or NMMA) are usually copolymerized.

United States Patent No. 5,371,137 (equivalent to EP 0 530 013) to Blincow et al. discloses the emulsion polymerization of vinyl C₁ to C₃ alkanoate/C₂ to C₄ alkylene copolymer. The bonding strength of the copolymer is improved with the inclusion of vinyl esters of C₄ to C₁₈ primary carboxylic acids as a monomer. The copolymer emulsions are used for adhesives for packaging, flooring, and automotive applications having the following general composition: i) from about 5% to about 85% vinyl C₁ to C₃ alkanoate, ii) from about 10% to about 50% of C₂ to C₄ alkylene, and iii) from about 5% to about 85% of vinyl esters of C₄ to C₁₈ primary or secondary carboxylic acids.

United States Patent No. 6,746,555 (equivalent to EP 1 069 169) to Künstle et al. discloses low-emission adhesives based on an aqueous, protective colloid-free ethylene copolymers. The comonomer mixture comprises: a) from 5 to 50% by weight of ethylene, b) from 20 to 80% by weight of one or more vinyl esters from the group of vinyl esters of unbranched or branched carboxylic acids having 1 to 9 carbon atoms whose homopolymers have a glass transition temperature Tg >0° C, c) from 5 to 70% by weight of one or more vinyl esters from the group of vinyl esters of branched carboxylic acids having 8 to 13 carbon atoms whose homopolymers have a glass transition temperature Tg <0° C, d) from 0.5 to 10% by weight of one or more ethylenically unsaturated monocarboxylic or dicarboxylic acids having 3 or 4 carbon atoms, e) from 0 to 10% by weight of one or more ethylenically unsaturated, hydroxyalkyl-functional comonomers, and f) from 0 to 10% by weight of further, mono- or polyethylenically unsaturated comonomers, the % by weight being based in each case on the overall weight of the comonomers and adding up to 100% by weight, and the dispersion obtained therewith being dried if desired.

United States Patent No. 4,997,879 (equivalent to EP 0 216 210) to Weissgerber et al. discloses a pressure sensitive aqueous adhesive dispersion comprising 40-65% by weight, based on the dispersion weight, of a copolymer derived from emulsion polymerization of ethylene, vinyl esters of saturated carboxylic acids, ethylenically unsaturated hydroxyalkyl functional compounds. The copolymer is obtained by polymerization of: (a) 10-45% by weight of ethylene, (b) 0-25% by weight of acrylic ester(s), (c) 40-89% by weight of vinyl ester(s), (d) 0.5-4% by weight of ethylenically unsaturated carboxylic acids preferably with 3-4 carbon atoms, (e) 0.5-10% by weight of ethylenically unsaturated hydroxyalkylfunctional compounds, (f) 0-0.3% (meth)acrylamide, and (g) 0-10% ethylenically unsaturated sulfates and sulfonates or polyethylenically unsaturated compounds in the presence of 1 to 6% by weight, referred to the comonomer mixture, of at least one emulsifier.

United States Patent No. 6,169,132 (equivalent to EP 0 962 510) to Fickeisen et al. discloses an aqueous polymeric composition utilized as an adhesive for floor coverings. The composition of the polymer is comprised of: from 10 to 35% by weight of a water-dispersed polymer a) having a glass transition temperature Tg of below -10° C; from 5 to 22% by weight of a resin b) which is liquid at 23° C and 1 bar, has a glass transition temperature of below -10° C and in which abietic acid is soluble at 23° C and 1 bar such that it is possible to obtain solutions of resin B and abietic acid having a weight content of up to 50% by weight of abietic acid; from 5 to 22% by weight of resin c) which is based in abietic acid or on modified abietic acid and has a glass transition temperature of from 0 to 90° C and from 21 to 80% by weight of a filler d), the percentages by weight being based on the sum of the constituents of the aqueous composition with the exception of water.

International Patent Application Publication No. 2007/020201 of Urban et al. discloses an aqueous adhesive for non-ceramic flooring wherein the adhesive is comprised of a synthetic polymer as a binder and hydrolyzable silane groups.

United States Patent Application Publication No. 2002/0045692 of Fiedler et al. discloses a powder composition utilized in construction compositions wherein the powder comprises at least one carboxylic ester for hydrophobicization. Generally the composition of the powder composition can be as follows: at least one water-insoluble polymer selected from the group consisting of the vinyl ester, vinyl ester-ethylene, vinyl chloride, (meth)acrylate, styrene-(meth)acrylate homo- and/or copolymers, from 0 to 35% by weight, based on the total weight of the polymer, of at least one protective colloid, from 0 to 30% by weight, based on the total weight of the polymer, of anticaking agents, and from 0.1 to 30% by weight, based on the total weight of the polymer, of at least one carboxylic ester.

United States Patent Application Publication No. 2007/0184732 of Lunsford et al. discloses a high strength polyvinyl acetate binder utilized for fibrous substrates. The composition of the binder is comprised of water and an emulsion resin comprising from 50 pphwm to 100 pphwm vinyl acetate monomer units and from 4 to 15 pphwm post-crosslinking monomer composition.

United States Patent No. 6,174,568 to Kohlhammer et al. discloses a solvent resistant textile binder in the form of an aqueous copolymer dispersion or a powder wherein the binder is obtainable by the following: a) one or more monomers from the group consisting of vinyl esters of unbranched or branched carboxylic acids having 1 to 12 C atoms, esters of acrylic acid and methacrylic acid with unbranched or branched alcohols having 1 to 12 C atoms, vinyl aromatics, vinyl halides and alpha-olefins and b) 0.01 to 10% by weight, based on the total weight of the copolymer, of one or more monomers b1) selected from the group consisting of the N-(alkoxymethyl) acrylamides and N-(alkoxymethyl)methacrylamides with a C₁- to C₆-alkyl radical or one or more monomers b2) from the group N-methylolacrylamide and N-methylolmethacrylamide or mixtures ofN-(alkoxymethyl) compounds b1) and N-methylol compounds b2), characterized in that as emulsifier(s) from 0.01 to 10% by weight, based on the overall weight of the copolymer, of one or more emulsifiers from the group of the diesters of sulfosuccinic acid with linear, unbranched or branched, or cycloaliphatic alcohols are employed or are added to the aqueous copolymer dispersion after the end of the emulsion polymerization.

United States Patent Application Publication No. 2005/0009428 o Porter et al. discloses coated reinforcing fabrics for cementitious materials. A resinous coating is generally disclosed which could include among many other polymers, vinyl esters.

Copolymers of vinyl acetate and vinyl esters of neoalkanoic acid have been discussed in the literature for use in paints. *See* Smith et al., New Vinyl Ester Monomers for Emulsion Polymers, Progress in Organic Coating, Vol. 22, pp. 19-25, Elsevier (1993) which discusses water resistance and coating performance as well as Bassett, Hydrophobic Coatings from Emulsion Polymers, Journal of Coatings Technology, Vol. 73, No. 912, pp. 43-55 (201) which discusses pigmented paints.

It is an object of the present invention to provide improved copolymers comprising vinyl acetate, vinyl esters of α-monosubstituted fatty acids, such as vinyl 2-ethylhexanoate, functional monomers, including self-crosslinking monomers such as N-methylolacrylamide, and optionally additional comonomers, as well as products including such copolymers, to improve properties such as, for example, solvent resistance, dry strength, wet strength, hydrophobicity, alkaline aging resistance and so forth in the articles and compositions as described more fully hereinafter.

### Summary of the Invention

The present invention is directed generally to copolymers of vinyl acetate and vinyl esters of α-monosubstituted fatty acids, such as vinyl 2-ethylhexanoate, functional monomers and optional comonomers. Preferred compositions for binders include self crosslinking monomers as functional monomers, such as, for example, N-methylolacrylamide.

In various aspects of the invention, the copolymers of the invention are obtainable by reacting a) from 5-95 pphwm, preferably from 30-95 pphwm, more preferably from 35-75 pphwm, most preferably from 35-65 pphwm of vinyl acetate, b) from 95-5 pphwm, preferably from 60-8 pphwm, more preferably from 30-8 pphwm of at least one vinyl ester of α-monosubstituted fatty acids, and c) from 10-0.1 pphwm, preferably 8 - 0.5 pphwm, more preferably from 6-3 pphwm of at least one functional monomer, preferably a self cross-linking monomer.

Optionally, comonomers a) - c) are reacted in the presence of further comonomers such as d) at least one α-olefin; and/or e) at least one ester of ethylenically unsaturated carboxylic acids, such as butyl acrylate; and/or f) other comonomers. Preferred ranges of α-olefin can include from 35-5 pphwm or from 25-8 pphwm. Preferred ranges of ester of ethylenically unsaturated carboxylic acids can include from 45-5 pphwm or from 35-5 pphwm or from 20-5 pphwm. The copolymer is composed and synthesized so as to be especially useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass fibers or other mineral fibers, roofing or flooring materials.

Further details and uses will become apparent from the discussion which follows as well as the appended claims.

### Detailed Description of the Invention

The invention is described in detail below with reference to several embodiments and numerous examples. Such discussion is for purposes of illustration only. Modifications to particular examples within the spirit and scope of the present invention will be readily apparent to one of skill in the art. Terminology used herein is given its ordinary meaning consistent with the exemplary definitions herein.

The term "functional monomer" includes self-crosslinking monomers as well as monomer units with functional moieties, including stabilizing moieties such as ionic groups or hydroxyl groups capable of reacting with a crosslinking material and so forth.

The abbreviation "pphwm" refers to parts per hundred weight monomer based on monomer supplied to the reaction medium unless otherwise indicated.

The terminology "alkyl (meth)acrylate" refers to alkyl acrylates and alkyl methacrylates, typically C₁-C₁₂ alkyl such as butyl acrylate and so forth.

Other terminology and abbreviations are noted below.

Typically, polymers of this invention are predominantly comprised of vinyl acetate monomer (VA) and monomer units from vinyl esters of α-monosubstituted fatty acids such as vinyl 2-ethylhexanoate (V2EH): 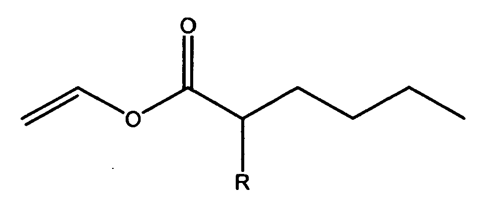 Vinyl 2-ethylhexanoate is where R = ethyl

More generally, any α-monosubstituted alkanoic acid vinyl ester may be used, for example, alkanoic acid esters of the formula: 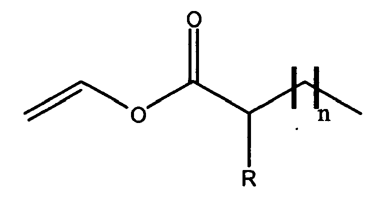 R = straight chain, branched or cyclic alkyl groups, for example, 2-alkylbutanoic acid (n=1) or 2-alkylpropanoic acid is where n=0; n is suitably 2-20. Suitable branched acid alkanoates may also be found in United States Patent No. 5,371,137 to Blincow et al., the disclosure of which is incorporated herein by reference.

Postcrosslinking comonomers (referred to in the art sometimes as self-crosslinking monomers) are the most preferred functional monomers utilized to make the copolymers of the invention. These monomers include acrylamidoglycolic acid (AGA), methyl methacrylamidoglycolate (MMAG), N-methylolacrylamide (NMA), N-methylolmethacrylamide(NMMA), allyl-N-methylolcarbamate, alkyl ethers such as the isobutoxy ethers or esters of N-methylolacrylamide, ofN-methylolmethacrylamide and of allyl N-methylolcarbamate.

Optional additional comonomers such as α-olefin monomers and/or neoalkanoic acid vinyl esters are also provided. Examples of suitable α-olefin monomers include ethylene, propylene, α-butylene, α-pentylene, α-hexylene , α-octylene and so forth.

Preferred polymers include emulsion interpolymers as described herein, however the optional inclusion of other comonomers is contemplated. Other potentially useful comonomers include 1-heptene, butadiene, hexadiene, isoprene, styrene, methyl styrene, divinyl benzene and the like. Representative of still other ethylenically unsaturated monomers include halogenated monomers such as vinyl chloride, vinylidene chloride, chloroprene, chlorostyrene and the like.

The inventive copolymers may be made by a variety of techniques by which vinyl acetate polymers are made including by bulk, solution, suspension and emulsion processes as is described in the Kirk-Othmer Encyclopedia of Chemical Technology, 4th Ed., Vol. 24, pp. 954-963 (Wiley 1996), the disclosure of which is incorporated herein by reference. The preparation of the inventive compositions can be carried out using continuous or discontinuous processes of free-radical emulsion polymerization. The polymerization may be conducted with the assistance of customary reaction vessels such as loop or stirred reactors. Preference is given to using discontinuous processes such as batch, combined batch/feed stream, pure feed stream processes or feed stream processes onto nucleating particles.

In these processes, water-soluble and/or oil-soluble initiator systems such as peroxodisulfates, azo compounds, hydrogen peroxide, organic hydroperoxides or dibenzoyl peroxide are employed. These may be used either by themselves or in combination with reducing compounds such as Fe (II) salts, sodium pyrosulfite, sodium hydrogen sulfite, sodium sulfite, sodium dithionite, sodium formaldehyde-sulfoxylate, ascorbic acid, as a redox catalyst system. The emulsifiers, and /or where appropriate, protective colloids, additives and/or auxiliaries may be added before, during or after the polymerization. Examples of emulsifiers include alkyl aryl polyglycol ethers and alkyl polyglycol ethers each preferably having from 8 to 50 mol of ethylene oxide units per molecule, block copolymers of ethylene oxide with propylene oxide, alkylsulfonates or alkyarylsulfonates, alkyl sulfates, alkyl and aryl ether sulfates and phosphates each having preferably from 8 to 18 carbon atoms in the lipophilic part and up to 50 ethylene oxide or propylene oxide units in the hydrophilic part, and also monoesters or diesters of sulfosuccinic acid or alkylphenols each having preferably from 8 to 18 carbon atoms in the alkyl radical. A preferred type of emulsifier does not contain linear alkyl phenol units in the lipophilic part.

Optionally, the polymeric compositions of the invention are grafted onto a polyhydroxy polymer, such as polyvinyl alcohol (PVOH), i.e.:

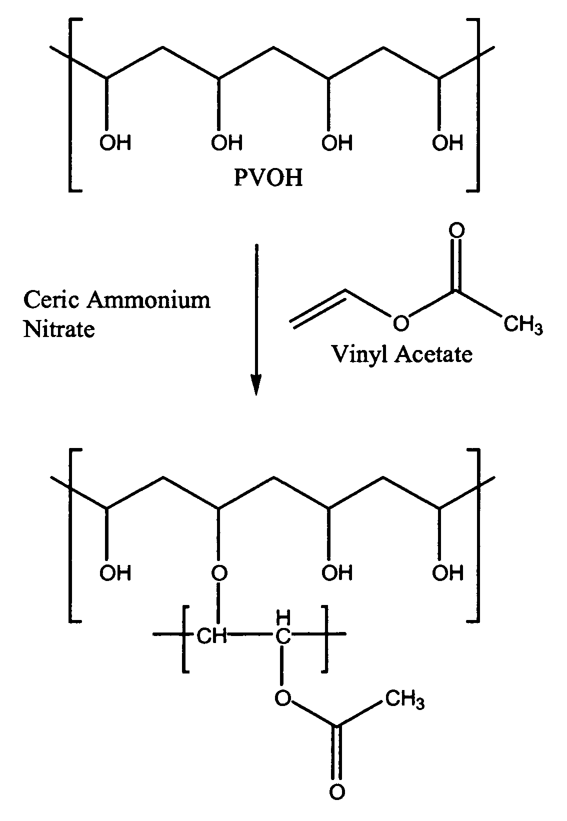

As is described in United States Patent No. 5,354,803 to Dragner et al., the disclosure of which is incorporated herein by reference. Any suitable technique for grafting the composition with a suitable polymer may be used. Other suitable polyhydroxy compounds for grafting may include sugars, cellulose and starch.

Representative of esters of ethylenically unsaturated carboxylic acids which may also be used include alkyl acrylates and methacrylates wherein the alkyl group contains 1 to 12 or 1 to 10 carbon atoms and esters of such acids as butenoic, maleic, fumaric, itaconic and the like. Representative of other esters which have an ethylenic unsaturation and are preferred include vinyl formate, vinyl versatate, and the like. The alkyl acrylates that can be used to prepare the acrylic ester latex binders of this invention include alkyl acrylates and alkyl methacrylates containing 1 to 12, preferably 1 to 10 carbon atoms in the alkyl group. The polymer backbone in the acrylic ester latexes can be either hydrophilic or hydrophobic and it can comprise polymerized soft monomers and/or hard monomers. The soft and hard monomers are monomers which, when polymerized, produce soft or hard polymers, or polymers in between. Preferred soft acrylic ester monomers are selected from alkyl acrylates containing 2 to 8 carbon atoms in the alkyl group and include ethyl acrylate, propyl acrylate, n-butyl acrylate, and 2-ethylhexyl acrylate. The hard acrylic ester monomers are selected from alkyl methacrylates containing up to 3 carbon atoms in the alkyl group and from non-acrylic monomers such as styrene and substituted styrenes, acrylonitrile, vinyl chloride, and generally any compatible monomer the homopolymer of which has a Tg above 50°C. Preferred acrylic ester monomers are selected from alkyl methacrylates containing 1 to 12 carbon atoms in the alkyl group, especially methyl methacrylate. *See* United States Patent No. 5,021,529 to Garrett.

Further monomers copolymerizable with vinyl esters are ethylenically unsaturated, ionic monomers, for example compounds which bear at least one carboxylic acid, sulfonic acid, phosphoric acid or phosphonic acid group directly adjacent to the double bond unit, or else are bonded thereto via a spacer. Examples include:
α,β-unsaturated C₃-C₈-monocarboxylic acids, α,β-unsaturated C₅-C₈-dicarboxylic acids and anhydrides thereof, and monoesters of α,β-unsaturated C₄-C₈-dicarboxylic acids.

Preference is given to unsaturated monocarboxylic acids, for example acrylic acid, methacrylic acid, and crotonic acid and the anhydrides thereof; unsaturated dicarboxylic acids, for example maleic acid, fumaric acid, itaconic acid and citraconic acid and the monoesters thereof with C₁-C₁₂-alkanols such as monomethyl maleate and mono-n-butyl maleate. Further preferred ethylenically unsaturated ionic monomers are ethylenically unsaturated sulfonic acids, for example vinylsulfonic acid, 2-acrylamido-2-methylpropanesulfonic acid, 2-acryloyloxy- and 2-methacryloyloxyethanesulfonic acid, 3-acryloyloxy- and 3-methacryloyloxypropanesulfonic acid and vinylbenzenesulfonic acid, and ethylenically unsaturated phosphonic acids, for example vinylphosphonic acid.

In addition, as well as the acids mentioned, it is also possible to use the salts thereof, preferably the alkali metal salts thereof or the ammonium salts thereof and especially the sodium salts thereof, for example the sodium salts of vinylsulfonic acid and of 2-acrylamidopropanesulfonic acid.

The ethylenically unsaturated free acids mentioned are present in aqueous solution at pH 11 predominantly in the form of their conjugate bases in anionic form and can, like the salts mentioned, be referred to as anionic monomers.

Also suitable as crosslinking monomers are epoxide-functional comonomers such as glycidyl methacrylate and glycidyl acrylate. Further examples are silicon-functional comonomers such as acryloxy-propyltri(alkoxy)silanes and methacryloxypropyltri(alkoxy)silanes, vinyltrialkoxysilanes and vinylmethyldialkoxysilanes, with alkoxy groups which can be present being, for example, methoxy, ethoxy and ethoxypropylene glycol ether radicals. Mention may also be made of useful monomers having hydroxy or CO groups, for example, hydroxyalkyl methacrylates and acrylates such as hydroxyethyl, hydroxypropyl or hydroxybutyl acrylate or methacrylate and also compounds such as diacetoneacrylamide and acetylacetoxyethyl acrylate or methacrylate, see United States Patent Application Publication No. 2007/0112117 of Weitzel.

Crosslinkers that can be used in conjunction with the present invention are also precrosslinking comonomers such as multiply ethylenically unsaturated comonomers, for example divinyl adipate, diallyl maleate, allyl methacrylate or triallyl cyanurate and the like.

The polymer compositions in the present invention are useful in connection with emulsions in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. Among the properties which may be enhanced are: wet scrub resistance; alkaline resistance; dimensional/Structure integrity ("Verschiebefestigkeit"); solvent resistance; dry tensile; wet bond strengths; wet bond strengths at elevated temperatures setting speed; adhesion to nonpolar substrates; impact resistance; thermal stability; strand integrity; lower water absorption; increased hydrophobicity; higher wet tensile strength and better water spot times.

Further, there is provided in accordance with the present invention a polymer composition including: a) 1-99 pphwm, preferably 5-95 pphwm of vinyl acetate monomer units; and b) 99-1 pphwm, preferably 95-5 pphwm of monomer units from vinyl esters of α-monosubstituted fatty acids, wherein said polymer is composed and synthesized so as to be useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. Typically, the polymer composition includes from 10-90 pphwm vinyl acetate monomer units and from 90-10, preferably 50-20 pphwm vinyl ester of α-monosubstituted fatty acid monomer units. The α-monosubstituted monomer units may be vinyl 2-ethyl hexanoate monomer units. The interpolymers may also include c) 40-1, preferably 35-5 pphwm of α-olefin monomer units, e.g. ethylene units if so desired.

Preferred polymer compositions include: a) 1-99 pphwm, preferably 5-95 pphwm of vinyl acetate monomer units; b) 99-1 pphwm, preferably 95-5 pphwm of monomer units from vinyl esters of α-monosubstituted fatty acids, such as vinyl 2-ethyl hexanoate monomer units; and c) 10-0.1 pphwm of functional monomer units and the polymer is composed and synthesized so as to be useful for binders for fibrous substrates such as woven or nonwoven products including textiles, apparel in general, papers, scrim, engineered fabrics, glass or other mineral fibers, roofing or flooring materials. The functional monomer units are typically crosslinking monomer units such as self-crosslinking monomer units present in an amount of from 0.5-8 pphwm.

Yet another embodiment is an interpolymer comprising: a) 1-99 pphwm, preferably 5-95 pphwm of vinyl acetate monomer units; b) 99-1 pphwm, preferably 95-5 pphwm of monomer units from vinyl esters of α-monosubstituted fatty acids; c) 40-1, preferably 35-5 pphwm of α-olefin monomer units; and d) 10-0.1 pphwm of functional monomer units.

Still yet another aspect of the invention includes interpolymers of: a) 1-99 pphwm, preferably 5-95 pphwm of vinyl acetate monomer units; b)99-1 pphwm, preferably 95-5 pphwm of monomer units from vinyl esters of α-monosubstituted fatty acids; c) 40-1, preferably 20-5 pphwm of alkyl (meth)acrylate monomer units; and d) 10-0.1 pphwm of functional monomer units. The alkyl (meth) acrylate monomer units are selected from (C₁-C₁₂) alkyl (meth)acrylate units; for example they may be butyl acrylate units.

The foregoing polymers may be incorporated into a variety of articles and compositions, for example, nonwovens, coatings and so forth and used in the manufacture of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, as well as the aforesaid fibrous products, caulks and sealants; functional coatings for waterproofing and so forth; powders such as redispersible powders for waterproofing, adhesives and the like. So also the copolymers of the invention may be grafted to a polyhydroxy polymer to form a graft copolymer.

### Examples

The following examples are presented to further illustrate the present invention and should not be taken as limiting the invention. The parts and percentages indicated in the examples are by weight unless noted otherwise.

Abbreviations:
CA: Crotonic acid
VA: Vinyl acetate monomer; obtained from Celanese Chemicals Europe GmbH; inhibitor content 3-5 ppm hydroquinone (HQ), used as supplied, unless otherwise indicated;
V2EH: Vinyl 2-ethyl hexanoate monomer, available from Japan VAM and Poval Co, Ltd; distilled and post-stabilized with 3-5 ppm MEHQ; used as supplied, unless otherwise indicated;
E: Ethylene monomer.
BA: Butyl acrylate
NMA-LF a blend of N-methylolacrylamide/acrylamide (48% aq. solution typically) commercially available from Cytec Industries.

Vinyl esters of neoalkanoic acids have the following general structure: 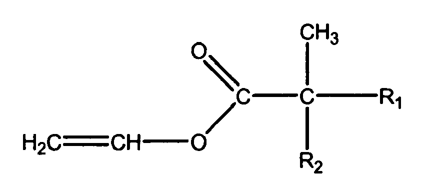 where R₁ and R₂ are alkyl groups which together may typically collectively contain from about 6-8 carbon atoms. Veo Va™ neoalkanoic vinyl esters are available from Hexion Specialty Chemicals of Columbus, Ohio. In VeoVa™ 9, R₁ and R₂ together contain about 6 carbon atoms. In VeoVa™ 10, R₁ and R₂ together contain about 7 carbon atoms. In VeoVa™ 11, R₁ and R₂ together contain about 8 carbon atoms. Inclusion of neoalkanoic acid vinyl esters in polymer systems introduces hydrophobicity to the polymer that can provide hydrocarbon solubility adhesion to low-energy surfaces and also add steric bulk to the polymer providing it with greater hydrolytic stability.

HLB: HLB numbers are indicative of a surfactant's emulsification behavior and relate to the balance between the hydrophilic and lipophilic (hydrophobic) portions of the molecule. HLB numbers are further described in Griffin, W. C., J. Soc. Cosmet. Chem. 1, 311 (1949).

### Adhesives/Flooring Application

Preparation of improved Soft Flooring Adhesive using Vinyl 2-ethylhexanoate as comonomer:

### Example 1-1

### Preparation of polymer dispersion:

An aqueous solution comprising the following constituents was introduced into an autoclave reactor with a stirrer, jacket heating and metering pumps:
5900 g deionized water
750 g of a 70 % strengths aqueous solution of commercial alkylpolyglycol ether with 28 mol of ethylene oxide and HLB value of 17
230 g of a 30 % strength aqueous solution of a commercial alkylethersulfate with 7 mol of ethylene oxide
30 g of hydroxyethylcellulose (viscosity of the 2% strength aqueous solution: 4,000 mPa·s)
130 g of a 30% strength aqueous sodium vinylsulfonate solution, 7.2 g of Bruggolite® E (sodium formaldehyde sulfoxylate, from BASF) as a reducing agent
and
40 mg of Mohr's salt

The aqueous phase was adjusted to pH 7 with acetic acid before metering into the reactor.

The apparatus was purged of atmospheric oxygen, the first part of the monomer mixture was introduced into the apparatus, and 2330 g ethylene was metered into the apparatus while the reactor was heated up to a temperature of 65 °C, resulting in a final pressure of 45 bar.

### Monomer mixture in the initial addition:

8600 g of vinyl acetate
2300 g of vinyl 2-ethylhexanoate

The residual monomer mixture which is metered in comprises:
2300 g of vinyl 2-ethylhexanoate
130 g of acrylic acid
130 g of glycidyl methacrylate

### Initiator solution 1:

72 g of sodium peroxodisulfate
20 g sodium bicarbonate
860 g of water

### Initiator solution 2:

29 g of Bruggolite® E
430 g of water

At 65°C inner temperature of the reactor, the initiator 1 solution was metered into the reactor during 730 min. (10 % in 185 min. 15 % in 130 min. and 75 % in 315 min.). 15 minutes after having started with initiator 1, initiator 2 and the remaining monomers were metered in parallel to the initiator solution 2 over a period of 300 minutes. The ethylene pressure was kept constant at approx 45 bars during this period. After that, the pressure slowly decreased. Ninety minutes after end of the monomer delay feed, the reactor inner temperature was raised to 75°C. After finishing the metering of initiator 1, the reaction mixture was cooled to < 40°C, depressurized and transferred to an adjustment vessel. Residual monomers were reduced by treatment with a 70 % aqueous solution of tert-Butylhydroperoxide and an aqueous solution of Bruggolite® E in water at 75°C. After this treatment, the resulting emulsion was set to a pH value of 4 by adding a 4.7 % aqueous solution of sodium hydroxide.

The resulting product had a solids content of 66 %, a Brookfield RV (spindle 3, 20 rpm, 23°C) viscosity of 2,110 mPa·s and pH value of 4 and a glass transition temperature of -8°C (midpoint), measured by Differential Scanning Calorimetry (DSC).

### Comparative Example 1-A

### Polymer dispersion for Comparative Example:

Mowilith^{®} LDL 1355 W from Celanese Emulsions GmbH (Kronberg/Germany), a terpolymer emulsion based on vinyl acetate, ethylene and VeoVa^{®} (vinyl ester of versatic acids). The emulsion according to the technical data sheet has a Tg of -7 °C, a solids content of 55 % and a Brookfield viscosity of 2,000 mPa·s and a pH value of 4.

### Preparation of a Flooring Adhesives based on Example 1-1 and the Comparative Example 1-A.

The floor adhesives used in the test were formulated in the following standard recipe for one-sided floor adhesives free from low-boiling components:
35 parts of dispersion
18 parts of resin melt (preparation see below)
37 parts of calcium carbonate as filler
0.2 part of defoamer, for example Agitan^{®} 305 (Muenzing Chemie)
0.4 parts of dispersing agent, for example Mowiplus^{®} XW 330 (Clariant)
1.0 part of a 10 % solution of sodium polyphosphate, for example Calgon^{®} N (BK Giulini)
0.2 part of preservative, for example Acticide^{®} MBS (Thor Chemie)
0.2 part of a slurry of hydroxyethylcellulose (viscosity of the 2% strength aqueous solution: 100,000 mPa·s) in 3 parts water
Sodium hydroxide solution to adjust the pH to 7.5
Water to adjust the viscosity to 35,000 mPa·s
The resin melt used for preparation of the adhesives comprised:
45 parts of rosin resin
45 parts of Alresat^{®} KE300 (Omya AG)
10 parts of Genapol^{®} PF 20 (Clariant GmbH)

Test specimens consisting of fiber cement and PVC tiles were prepared to determine the shear and peel bond strengths according to DIN 16860. The specimens were stored under climatically controlled conditions at the stated temperatures and were then tested for their bond strengths in accordance with the specification DIN 16860. The results are seen in Table 1.

**Table 1: Application Test Results**

| Example | Shear Strengths (N/cm²) | | | Peel Strengths (N/cm²) | | |
|---|---|---|---|---|---|---|
| | Requirement: > 30 N/cm² | | | Requirement: > 10 N/cm² | | |
| | 23°C | 50°C | 70°C | 23°C | 50°C | 70°C |
| Example 1 | 45.8 | 54.2 | 52.6 | 15.8 | 24.3 | 23.4 |
| Comparative 1A | 36.8 | 49.8 | 45.4 | 15.0 | 18.0 | 15.4 |

These results document an improvement in bond strengths over a state-of-the-art product with a comparable polymer composition.

### Binders for Engineered Fabric, Glass Fiber for Roofing and Flooring Products and Textiles/Nonwovens

### Comparative Example 2-1

### Preparation of a Polymer comprising VA/NMA-LF 95/5

An aqueous solution was prepared by the addition of 1.33 g of a 30% aqueous solution of a secondary alkane sulfonate anionic surfactant, (Hostapur^{™} SAS 30 from Clariant), 8.19 g of an 80% aqueous solution of a an alcohol ethoxylate nonionic surfactant, (Emulan^{™} TO 2080 from BASF), to 908.5 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C and 120.98 g of vinyl acetate was added.

A second aqueous solution was prepared by the addition of 2.68 g of a 30% aqueous solution of a secondary alkane sulfonate anionic surfactant, (Hostapur^{™} SAS 30 from Clariant), and 33.49 g of an 80% aqueous solution of an alcohol ethoxylate nonionic surfactant, (Emulan^{™} TO 2080 from BASF), to 214.94 g of deionized water and heated to 50°C while stirring until the surfactants were dissolved. After cooling the surfactant solution 128.42 g of an approximately 48% active blend of N-methylolacrylamide and acrylamide, (Cylink^{™} NMA-LF from Cytec), 1.74 g of sodium persulfate and 1.21 g of sodium bicarbonate were added to the aqueous solution. The second aqueous solution and 1050.87 g of vinyl acetate were mixed to form a pre-emulsion.

When the reactor temperature stabilized at 65°C, a solution of 2.67 g of sodium persulfate in 20.01 g of deionized water was added. When an exotherm was observed, the temperature was increased to 75°C. At 70°C the addition of the pre-emulsion was commenced to last 4 hours. After the addition was complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.01 g of deionized water was added over 10 minutes. Then a solution of 1.54 g of sodium metabisulfite in 12.01 g of water was over 10 minutes. The reaction mixture was cooled and filtered through a 180µ mesh.

The resultant dispersion had a solids content of 49.7%, viscosity of 56 mPa.s, pH of 4.4, grit, (measured on a 40 µ mesh), of 0.12% and a Tg, (onset, by DSC) of 35.6°C.

For Examples 2-2 to 2-7, V2EH was used as supplied by Japan VAM and Poval Co., Ltd. For Examples 2-8 to 2-10 V2EH was distilled and post-stabilized with 3-5 ppm MEHQ.

### Example 2-2:

### Preparation of a Polymer comprising VA/V2EH/NMA-LF 65.3/29.8/4.9

An aqueous solution was prepared by the addition of 1.34 g of a 30% aqueous solution of a secondary alkane sulfonate anionic surfactant, (Hostapur^{™} SAS 30 from Clariant), 8.77 g of an 80% aqueous solution of a an alcohol ethoxylate nonionic surfactant, (Emulan^{™} TO 2080 from BASF), to 887.98 g of deionized water and heated to 50°C while stirring until the surfactants were dissolved. The solution was cooled and 1.77 g of sodium bicarbonate was added. Then the aqueous solution was charged to a 3-liter glass reactor equipped with a stirrer and dropping funnels.

The reactor was heated to 65°C. A first monomer mixture comprising 85.5 g of vinyl acetate and 36.64 g of vinyl 2-ethylhexanoate was added to the reactor. A second monomer mixture comprising 726.5 g of vinyl acetate and 334.56 g of vinyl 2-ethylhexanoate was prepared. A second aqueous solution was prepared by the addition of 24.71 g of a 30% aqueous solution of a secondary alkane sulfonate anionic surfactant, (Hostapur^{™} SAS 30 from Clariant), and 18.85 g of an 80% aqueous solution of an alcohol ethoxylate nonionic surfactant, (Emulan^{™} TO 2080 from BASF), to 216.8 g of deionized water and heated to 50°C while stirring until the surfactants were dissolved. After cooling the surfactant solution, 127.12 g of an approximately 48% active blend of N-methylolacrylamide and acrylamide, (Cylink^{™} NMA-LF from Cytec), 1.75 g of sodium persulfate and 1.22 g of sodium bicarbonate were added to the aqueous solution. The second monomer mixture and the second aqueous solution were mixed to form a pre-emulsion.

When the reactor temperature stabilized at 65°C, a solution of 2.69 g of sodium persulfate in 20.18 g of deionized water was added. When an exotherm was observed, the temperature was increased to 75°C. At 70°C the addition of the pre-emulsion was commenced to last 4 hours. After the addition was complete, a solution of 0.11 g of sodium persulfate in 5.92 g of deionized water was added and the temperature was increased to 80°C for 1 hour. The reactor was then cooled to 50°C, and a solution of 2.05 g of t-butyl hydroperoxide in 12.18 g of deionized water was added over 10 minutes. Then a solution of 1.55 g of sodium metabisulfite in 12.18 g of water was added over 10 minutes. The reaction mixture was cooled and filtered through a 180µ mesh.

The resultant dispersion had a solids content of 50.3%, viscosity of 236 mPa.s, pH of 4.3, grit, (measured on a 40 µ mesh), of 0.017% and a Tg, (onset, by DSC), of 12.1°C.

### Example 2-3:

### Preparation of a Polymer comprising VA/V2EH/NMA-LF 38.6/57.9/3.5

A similar procedure to example 2-2 was followed except that the relative amounts of vinyl acetate, vinyl 2-ethylhexanoate and NMA-LF were varied. The resultant dispersion had a solids content of 49.6%, viscosity of 290 mPa.s, pH of 4.3, grit, (measured on a 40 µ mesh), of 0.072% and a Tg, (onset, by DSC), of - 5.7°C.

### Example 2-4:

### Preparation of a Polymer comprising VA/V2EH/E/NMA-LF 70/15/10/5

An aqueous solution was prepared by the addition of 125.8 g of a 10% aqueous solution of hydroxyethyl cellulose, having a Brookfield viscosity at 5% concentration of 100 - 180 mPa.s at 25°C, (Natrosol^{™} 250 LR from Aqualon), 282.6 g of a 70% aqueous solution of a an alcohol ethoxylate nonionic surfactant, (Emulsogen^{™} EPN 287 from Clariant), and 30.5 g of a 30% aqueous solution of a secondary alkane sulfonate anionic surfactant, (Hostapur^{™} SAS 30 from Clariant), to 2984 g of deionized water while stirring. 38.1 g of a 30% active solution of sodium vinylsulfonate was added, followed by 0.19 g of Mohr's salt, then the pH was adjusted to pH 4.4 by the use of phosphoric acid. Then the aqueous solution was charged to a 10-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 16.76% of a monomer mixture comprising 3371.3 g of vinyl acetate and 722.7 g of vinyl 2-ethylhexanoate was pumped to the reactor. 480.3 g of ethylene was metered to the reactor, followed by 10% of a solution comprising 22.9 g of sodium metabisulfite dissolved in 274.5 g of deionized water.

When the reactor temperature stabilized at 35°C, the additions of a solution of 30.2 g of sodium persulfate dissolved in 274.5 g of deionized water and the remainder of the sodium metabisulfite solution were commenced at a constant rate to last 6 hours. The temperature was gradually increased to 65°C over a period of approximately 20 minutes, at which time the additions of the remainder of the monomer mixture and a solution of 500.3 g of an approximately 48% active blend of N-methylolacrylamide and acrylamide, (Cylink^{™} NMA-LF from Cytec), in 452.9 g of deionized water were added separately to the reactor at a constant rate over 5 hours. The reactor temperature was maintained at 65°C for the duration of the reaction.

After the reaction was complete, the reaction mixture was cooled to 50°C and transferred to a degassing vessel. A solution comprising 3.66 g of sodium metabisulfite and 0.09 g of ferrous sulfate heptahydrate in 45.7 g of deionized water was added over 5 minutes, followed by a solution comprising 4.57 g of t-butylhydroperoxide in 45.7 g of deionized water over 30 minutes. The mixture was cooled, then 0.32 g of Agitan^{™} 282 (from Münzing) and 14.64 g of a 12.5% active solution of ammonium hydroxide were added, and the resultant dispersion was filtered through a 180µ mesh.

The resultant dispersion had a solids content of 51.2%, viscosity of 200 mPa.s, pH of 3.5, grit, (measured on a 40 µ mesh), of 0.015% and a Tg, (onset, by DSC), of -0.7°C.

### Example 2-5:

### Preparation of a Polymer comprising VA/V2EH/E/NMA-LF 65.9/9.5/20.0/4.6

An aqueous solution was prepared by the addition of 330.8 g of a 10% aqueous solution of hydroxyethyl cellulose, having a Brookfield viscosity at 5% concentration of 100 - 180 mPa.s at 25°C, (Natrosol^{™} 250 LR from Aqualon), 777.5 g of a 70% aqueous solution of a an alcohol ethoxylate nonionic surfactant, (Emulsogen^{™} EPN 287 from Clariant), to 7950.9 g of deionized water while stirring. 100.2 g of a 30% active solution of sodium vinylsulfonate was added, followed by 0.51 g of Mohr's salt, then the pH was adjusted to pH 4.4 by the use of phosphoric acid. Then the aqueous solution was charged to a 30-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 20.0% of a monomer mixture comprising 8299.5 g of vinyl acetate and 1202.8 g of vinyl 2-ethylhexanoate was pumped to the reactor. 2525.9 g of ethylene was metered to the reactor, followed by 10% of a solution comprising 50.5 g of sodium erythorbate dissolved in 721.7 g of deionized water.

When the reactor temperature stabilized at 35°C, the additions of a solution of 79.4 g of sodium persulfate dissolved in 721.7 g of deionized water and the remainder of the sodium erythorbate solution were commenced at a constant rate to last 6 hours. The temperature was gradually increased to 65°C over a period of approximately 30 minutes, at which time the additions of the remainder of the monomer mixture and a solution of 1202.8 g of an approximately 48% active blend of N-methylolacrylamide and acrylamide, (Cylink^{™} NMA-LF from Cytec), in 1190.8 g of deionized water were added separately to the reactor at a constant rate over 5 hours. The reactor temperature was maintained at 65°C for the duration of the reaction.

After the reaction was complete, the reaction mixture was cooled to 30°C and discharged. 8.6 kg of the discharged material was treated with 21.2 g of a 12% active solution of ammonium hydroxide, then 2.3 kg was transferred to a 3-liter glass reactor equipped with a stirrer and dropping funnels and heated to 60°C. A solution comprising 0.88 g of sodium erythorbate and 0.022 g of ferrous sulphate heptahydrate in 11.0 g of deionized water was added over 5 minutes, followed by a solution comprising 1.10 g of t-butylhydroperoxide in 11.0 g of deionized water over 30 minutes. The reactor was cooled to below 30°C, and the resultant dispersion was filtered through a 180u mesh.

The resultant dispersion had a solids content of 51.3%, viscosity of 100 mPa.s, pH of 4.9, grit, (measured on a 40 µ mesh), of 0.073% and a Tg, (onset, by DSC), of -12.8°C.

### Example 2-6:

### Preparation of a Polymer comprising VA/V2EH/E/NMA-LF 60.1/19.1/16.2/4.6

A similar procedure to example 2-5 was followed except that the relative amounts of vinyl acetate, vinyl 2-ethylhexanoate and ethylene were varied. The monomer mixture comprised 7577.8 g of vinyl acetate and 2405.6 g of vinyl 2-ethylhexanoate. The amount of ethylene metered to the reactor was 2044.8 g. The resultant dispersion had a solids content of 51.5%, viscosity of 1400 mPa.s, pH of 4.9, grit, (measured on a 40 µ mesh), of 0.035% and a Tg, (onset, by DSC), of - 11.9°C.

### Example 2-7:

### Preparation of a Polymer comprising VA/V2EH/E/NMA-LF/CA 62.7/14.2/18.0/4.6/0.5

A similar procedure to example 2-5 was followed except that the relative amounts of vinyl acetate, vinyl 2-ethylhexanoate and ethylene were varied, and 0.5% of crotonic acid was included. The amount of deionized water used for the initial aqueous solution was reduced to 7928.3 g. The monomer mixture comprised 7938.6 g of vinyl acetate and 1804.2 g of vinyl 2-ethylhexanoate. 65.0 g of crotonic acid and 34.9 g of 25% active ammonium hydroxide solution were added to the solution of NMA-LF. The amount of ethylene metered to the reactor was 2285.4 g. The resultant dispersion had a solids content of 50.0%, viscosity of 162 mPa.s, pH of 4.5, grit, (measured on a 40 µ mesh), of 0.021% and a Tg, (onset, by DSC), of -12.2°C.

### Example 2-8:

### Preparation of a Polymer comprising VA/V2EHBA/NMA-LF 65/20/10/5

An aqueous solution was prepared by the addition of 1.33 g of a 30% aqueous solution of a secondary alkane sulfonate anionic surfactant, (Hostapur^{™} SAS 30 from Clariant), and 9.36 g of a 70% aqueous solution of an alcohol ethoxylate nonionic surfactant, (Emulsogen^{™} EPN 287 from Clariant) to 902.75 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C. A first monomer mixture comprising 81.25 g of vinyl acetate, 25.0 g of vinyl 2-ethylhexanoate and 12.5 g of butyl acrylate was added to the reactor.

A second monomer mixture comprising 731.25 g of vinyl acetate, 225.0 g of vinyl 2-ethylhexanoate and 112.5 g of butyl acrylate was prepared. A second aqueous solution was prepared by the addition of 2.68 g of a 30% aqueous solution of a secondary alkane sulfonate anionic surfactant, (Hostapur^{™} SAS 30 from Clariant), and 38.28 g of a 70% aqueous solution of an alcohol ethoxylate nonionic surfactant, (Emulsogen^{™} EPN 287 from Clariant), to 162.0 g of deionized water and heated to 50°C while stirring until the surfactants were dissolved. After cooling the surfactant solution 130.21 g of an approximately 48% active blend of N-methylolacrylamide and acrylamide, (Cylink^{™} NMA-LF from Cytec), was added to the aqueous solution. The second monomer mixture and the second aqueous solution were mixed to form a pre-emulsion.

When the reactor temperature stabilized at 65°C, a solution of 2.67 g of sodium persulfate in 20.0 g of deionized water was added. When an exotherm was observed, the temperature was increased to 75°C. At 70°C the additions of the pre-emulsion and a solution of 1.74 g of sodium persulfate and 1.21 g of sodium bicarbonate in 53.0 g of deionized water were commenced to last 4 hours. After the additions were complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.08 g of deionized water was added over 10 minutes. Then a solution of 1.54 g of sodium metabisulfite in 12.08 g of water was added over 10 minutes. The reaction mixture was cooled and filtered through a µ mesh.

The resultant dispersion had a solids content of 49.4%, viscosity of 285 mPa.s, pH of 4.5, grit, (measured on a 40 µ mesh), of 0.008% and a Tg, (onset, by DSC), of 11.3°C.

### Example 2-9:

### Preparation of a Polymer comprising VA/V2EH/BA/NMA-LF 65/20/10/5 with 0.5% of silane monomer

A similar procedure to example 2-8 was followed except that 0.5% of vinyl trimethoxysilane, (Silquest^{™} A171 from Momentive), was included. Therefore 6.25 g of Silquest^{™} A171 was added to the second monomer mixture. The resultant dispersion had a solids content of 50.2%, viscosity of 470 mPa.s, pH of 4.5, grit, (measured on a 40 µ mesh), of 0.006% and a Tg, (onset, by DSC), of 11.5°C.

### Example 2-10:

### Preparation of a Polymer comprising VA/V2EH/BA/NMA-LF 65/20/10/5 with 0.5% of phosphate monomer

A similar procedure to example 2-8 was followed except that 0.5% of a proprietary phosphate functional monomer, (Sipomer^{™} PAM 300 from Rhodia), was included. Therefore 6.25 g of Sipomer^{™} PAM 300 was added to the second monomer mixture. The resultant dispersion had a solids content of 49.5%, viscosity of 306 mPa.s, pH of 3.8, grit, (measured on a 40 µ mesh), of 0.015% and a Tg, (onset, by DSC), of 11.4°C.

### Application Test Procedures

### General Sample Preparation

The procedure for preparing the test specimens follows: A substrate was dip-nip saturated with the polymer dispersion and then thermally dried. Whatman #1 Filter Paper sheets, commercially available from Whatman, Inc., were used as substrate and stored under controlled temperature (23 °C) and humidity (50%) conditions before use. The filter paper was cut to approximately 265x220 mm sheets and weighed.

The polymer dispersion (incl. 1% mono ammonium phosphate) was diluted to the solids level to achieve an add-on of about 20%. The Whatman filter paper was dip-nip saturated by passing the substrate through the dispersion bath and then passing the saturated sheets through the pressurized nip rolls of a dual roller saturator (Werner Mathis VFM or a similar saturator) to squeeze off the excess polymer dispersion. The saturated sheet was then placed into an oven

(Mathis) and dried at 130 °C for 10 min. The saturated, dried sheet was reconditioned at controlled temperature and humidity conditions for a minimum of 12 hours. The sheet was reweighed and then calculated for % add-on.

### Water Spot Test

To test hydrophobicity, with a micropipette, a drop of demineralized water was placed on the sheet and the time was measured until the water was fully absorbed.

### Cobb Test

Cobb test was applied according to DIN EN 20 535 (n.a. in the table means test not applicable due to a too hydrophilic polymer).

### Tensile Strength

Tensile strength was measured according to WSP 110.4 (05) WD. Therefore a 5 cm wide paper strip was clamped in a tensile testing machine (Lloyd LR100K) and a force applied to the sample until break. Specimens to be tested in the wet condition were immersed in water at room temperature for 1 hour and tested when still wet. The tensile strength was the average of at least four measurements.

The relative wet strength was calculated as the ratio of wet tensile strength to the dry tensile strength.

### Formaldehyde

Formaldehyde was determined via HPLC from emulsion directly and from sheet after HCHO absorption in water (slight modification of ASTM D5910 / JIS L 1096-979).

Results appear in Table 2:

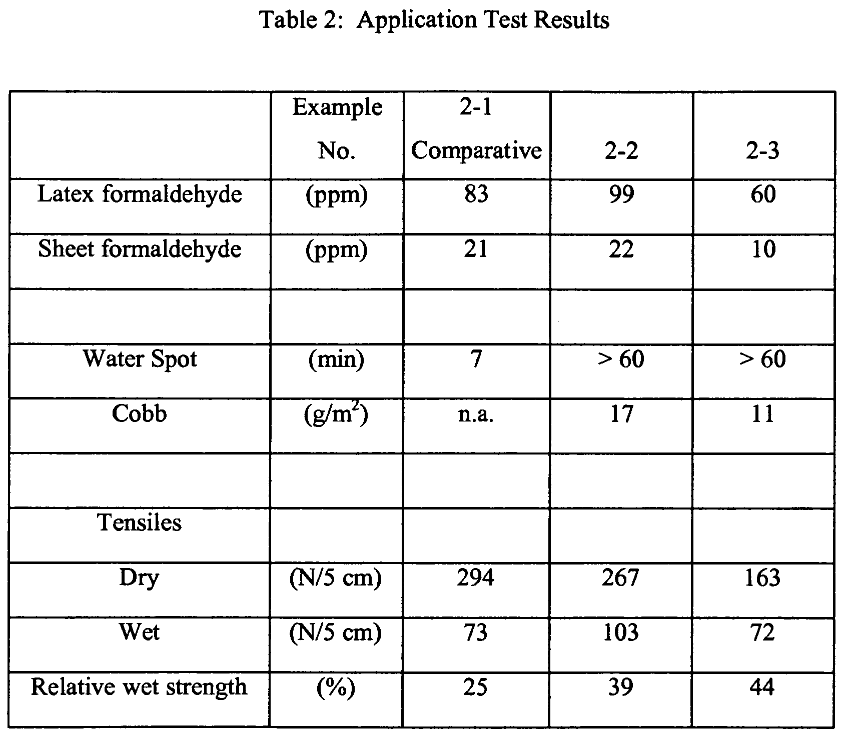

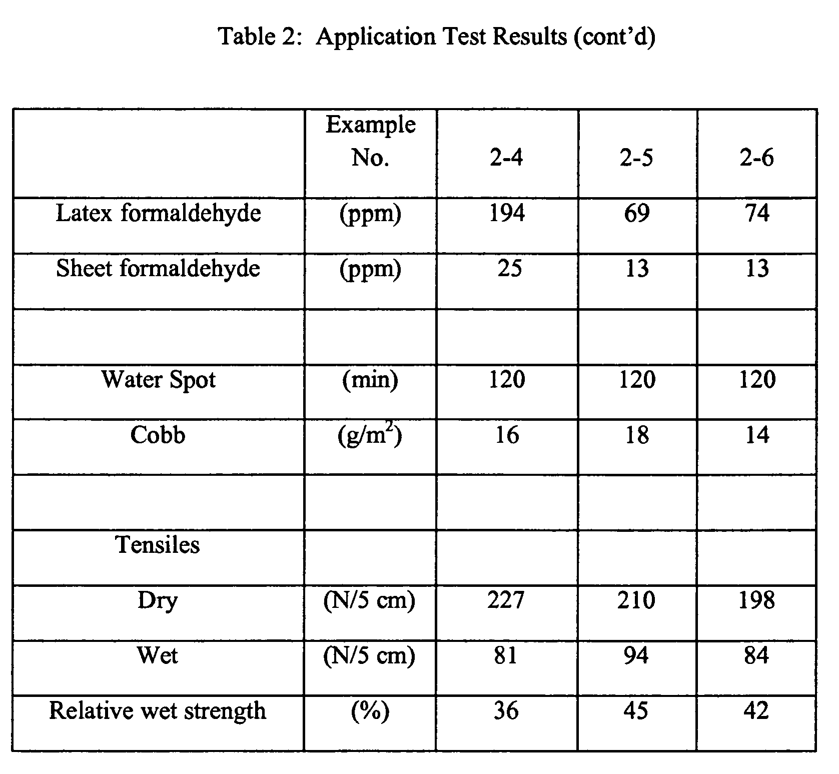

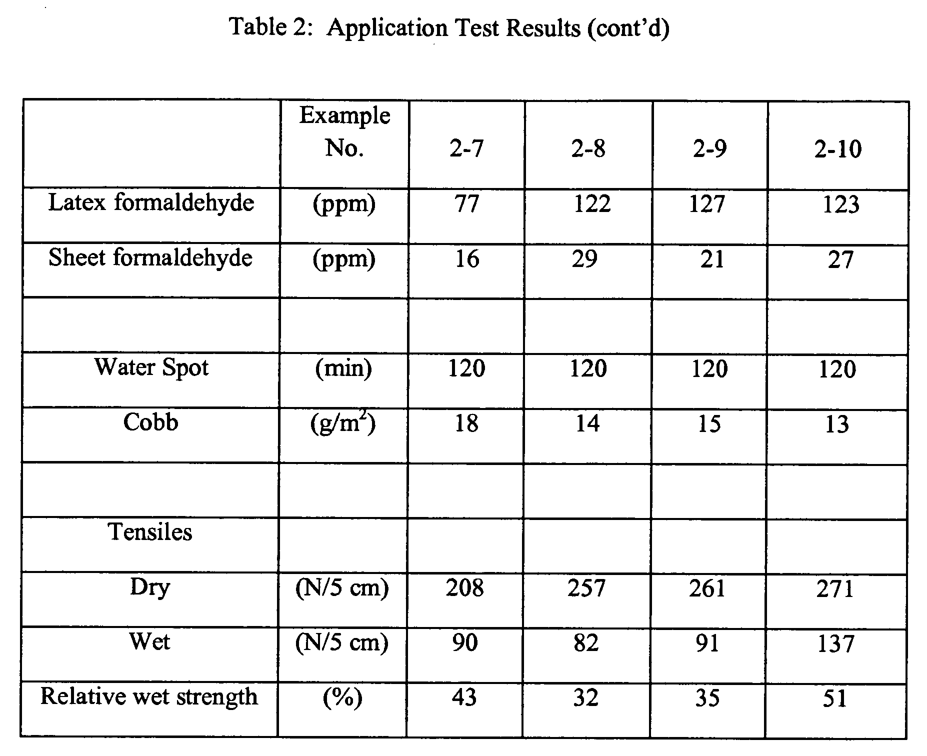

These results show that an improvement in hydrophobicity, wet tensile strength and retention of tensile strength after water soaking was achieved.
Scrim Binder (VA/V2EH/E/NMA-LF)

### Example 3-1

### Preparation of polymer dispersion:

The polymer of Example 2-4 above was tested as a scrim binder by the procedure described below.

The test method used to determine the tensile strength and elongation of the reinforcement as-delivered and after aging was that of European Technical Approval Guidelines (ETAG 04) for construction products. The tensile strength and elongation of the reinforcement was measured in the weft and warp direction on 10 samples respectively on the as-delivered state and after immersion in alkaline solution (aging) scrims. The samples measured 50 mm by at least 300 mm. They contained at minimum 5 threads within the width.

The free length of the sample between clamps was 200 mm. The tensile force was increased with a constant crosshead speed of (100 +/- 5) mm/min until failure occurred. The strength in N at failure and the elongation was recorded. The mean values of tensile strength and elongation was calculated from these individual values. The residual value calculated from the mean tensile strength value after aging was compared to the mean tensile strength value in the as-delivered state.

The test on the as-delivered state was conducted after conditioning the samples at (23+/- 2)°C and (50 +/- 5) %RH for at least 24 hours.

The sample was immersed for 28 days in alkaline solution at (23+/-2) °C. About 20 samples (10 in weft and 10 in warp direction) were stored in 4 liters alkaline solution. The solution was composed as follows: 1 g NaOH, 4 g KOH, 0.5 g Ca(OH)₂ to 1 liter of distilled water.

The sample was rinsed by immersion for 5 minutes in acid solution (5 ml HCl (35% diluted) to 4 liters water) and then placed successively in 3 baths of water (4 liters each). The samples were left for 5 minutes in each bath. They were subsequently dried at (23+/-2)°C and (50+/- 5)% RH for 48 hours.

After aging the residual strength must be at least 50% of the strength of the as-delivered state and 20 N/mm in order to meet specifications. The tested scrims had a width of 50 mm and therefore the tensile strength after aging must be at least 1000 N / 50mm. Results appear in Table 3. These results show that the copolymer composition of the invention is suitable for producing scrims which fulfil the ETAG 04 norm.

**Table 3: Alkali Aging results**

| Tensile strength at failure | Example 3-1 | Requirement | |
|---|---|---|---|
| As delivered (N/10 cm) | 2213 | > 2000 | Fulfilled |
| After alkali treatment (N/10 cm) | 1381 | > 1000 | Fulfilled |
| Ratio alkali / as delivered (%) | 62 | > 50 | fulfilled |

### Paints

The examples which follow serve to illustrate further aspects of the invention. The parts and percentages indicated in the examples are by weight unless noted otherwise.

### Preparation of Vinyl acetate copolymers with improved wet scrub resistance in high PVC interior paints

### Preparation of polymer dispersion for inventive Example 4-1

An aqueous solution comprising the following constituents was introduced into a reactor with a stirrer, jacket heating and metering pumps:
540 g deionized water
3.5 g of a 70 % strength aqueous solution of commercial alkylpolyglycol ether with 28 mol of ethylene oxide and an HLB value of 17
6 g of a commercial alkylethersulfate with 2EO
13 g of a 30% strength aqueous sodium vinylsulfonate solution
and
2.5 g of sodium acetate
2.5 g of sodium metabisulfite (SMBS)

The monomer was added in the form of a pre-emulsion consisting of:
535 g deionized water
18 g of a 70 % strengths aqueous solution of commercial alkylpolyglycol ether with 28 moles of ethylene oxide and HLB value of 17
34 g of a commercial alkylethersulfate with 2EO
14 g of a 30% strength aqueous sodium vinylsulfonate solution
1.8 g sodium bicarbonate
3 g sodium persulfate
996 g vinyl acetate
204 g vinyl 2-ethylhexanoate
15g glycidyl methacrylate

The apparatus was purged of atmospheric oxygen and the waterphase was heated up to a temperature of 65°C. Then 5% of the monomer emulsion was introduced into the apparatus and polymerization was started using 6g of a 3% aqueous solution of sodium persulfate (NaPS). After start of polymerization the temperature was taken to 70°C and the remaining monomer mixture was added over 240min. After the end of monomer addition, another 25g of 1.5%, NaPS aqueous solution as well as 25g of a 1.5% SMBS solution were added and the emulsion was heated to 75°C and held at this temperature for 1 hour. After the post heating period the reactor was cooled and the cold emulsion was adjusted to pH 6 using ammonia.

The resulting product had a solids content of 50 %, a Brookfield RV (spindle 1, 20 rpm, 23 °C) viscosity of 70 mPa.s and ph value of 6 and a glass transition temperature of 30 °C (midpoint), measured by Differential Scanning Calorimetry.

### Preparation of polymer dispersion for inventive Example 4-2

An aqueous solution comprising the following constituents was introduced into a reactor with a stirrer, jacket heating and metering pumps:
1100 g deionized water
35 g of a 70 % strength aqueous solution of commercial alkylpolyglycol ether with 28 moles of ethylene oxide and an HLB value of 17
13 g of a commercial alkylethersulfate
20 g of a 30% strength aqueous sodium vinylsulfonate solution
and
3g of sodium acetate

The following monomer mixture was used:
1050 g Vinyl acetate
215 g Vinyl 2-ethylhexanoate
19 g Glycidyl methacrylate

The apparatus was purged of atmospheric oxygen and the waterphase was heated up to a temperature of 60°C. Then 5% of the monomer mixture was introduced into the apparatus and polymerization was started using 35g of a 8% aqueous solution of sodium persulfate (NaPS) together with17g of a 6% aqueous solution of SMBS. 15 minutes after start of polymerization the remaining monomer mixture was added over 240min. To finish conversion after end of monomer addition the emulsion was heated to 85°C and held at this temperature for 1 hour. Additionally, after end of monomer addition, 30g of 4% NaPS aqueous solution were added. After the post heating period the reactor was cooled. As post additions 250g of an aqueous solution containing: 8% of a sodium salt of a styrene maleic anhydride, 16% of an Ethyleneoxyde-Propyleneoxide Blockpolymer with 10% EO (HLB2), and 2,5% of a commercial alkylethersulfate with 7 moles of ethylene oxide were supplied.

The resulting product had a solids content of 52 %, a Brookfield RV (spindle 3, 20 rpm, 23 °C) viscosity of 110 mPa·s and ph value of 6 and a glass transition temperature of 23 °C (midpoint), measured by Differential Scanning Calorimetry.

### Polymer dispersions for Comparative Examples 4-A, 4-B:

Acronal® 290 D, a styrene acrylic copolymer emulsion; the emulsion according to the technical data sheet has a Tg of 22 °C, a solids content of 50% and a Brookfield viscosity of 1100 mPa·s and a pH of 8.

Mowilith® LDM 2383, a copolymer emulsion based on vinyl acetate and ®VeoVa (vinyl ester of versatic acids). The emulsion according to the technical data sheet has a Tg of 29 °C, a solids content of 53 % and a Brookfield viscosity of 1,500 mPa·s and a pH of 4.5.

### Test of the Wet scrub resistance

The wet scrub resistance was tested according to DIN 53778 in the following paint formulation for a matt interior paint containing 10% binder.

**Table 4: Paint Compositions**

| | |
|---|---|
| Water | 304g |
| Methylhydroxyethylcellulose 30,000 mPa·s (5% solids) | 4g |
| Na-polyphosphate | 5g |
| K-polyacrylate | 4g |
| Defoamer (Mineral oil, hydrophobic silica) | 2g |
| Biocide | 2g |
| NaOH | 2g |
| Titanium dioxide (Rutil R3, 82% TiO₂; Al, Si coating) | 83g |
| Kaolin 2,5µm | 36g |
| Calcium carbonate 2 µm | 243g |
| Calcium carbonate 5 µm | 212g |
| Emulsion (50% solids) | 100g |
| Coalescent (2,2,4-trimethyl-1,3-pentandiol monoisobutyrate) | 2,5g |

The results are summarized in the table below.

**Table 5: Application test results**

| | Scrub Cycles (DIN 53778) |
|---|---|
| Acronal® 290 D 4A | 672 |
| Mowilith® LDM 2383 4B | 875 |
| Example 4-1 | 1249 |
| Example 4-2 | 2132 |

These results document an improvement in wet scrub resistance of the inventive examples over the commercial comparisons.

While the invention has been described in detail, modifications within the spirit and scope of the invention will be readily apparent to those of skill in the art. In view of the foregoing discussion, relevant knowledge in the art and references discussed above in connection with the Background and Detailed Description, the disclosures of which are all incorporated herein by reference, further description is deemed unnecessary. In addition, it should be understood that aspects of the invention and portions of various embodiments may be combined or interchanged either in whole or in part. Furthermore, those of ordinary skill in the art will appreciate that the foregoing description is by way of illustration only, and is not intended to limit the invention.

## Claims

1. A polymer composition suitable as a binder resin for fibrous substrates such as woven or nonwoven products including textiles, apparel in general, papers, scrim, engineered fabrics, glass or other mineral fibers, roofing or flooring materials, said polymer composition comprising a copolymer obtainable by reacting:
a) 5-95 pphwm of vinyl acetate; and
b) 95-5 pphwm of at least one vinyl ester of α-monosubstituted fatty acids; and
c) 10-0.1 pphwm of a self-crosslinking monomer; and optionally
d) 35-5 pphwm of at least one α-olefin; and/or
e) 45-5 pphwm of at least one ester of ethylenically unsaturated carboxylic acids; and/or
f) other comonomers.

2. The polymer composition as claimed in Claim 1, comprising a copolymer obtainable by reacting from 30-95 pphwm vinyl acetate.

3. The polymer composition as claimed in Claim 1, comprising a copolymer obtainable by reacting from 60-8 pphwm of at least one vinyl ester of α-monosubstituted fatty acids.

4. The polymer composition as claimed in Claim 1, wherein the vinyl ester of α-monosubstituted fatty acid is vinyl 2-ethyl hexanoate.

5. The polymer composition as claimed in Claim 1, wherein the copolymer is obtainable by reacting from 8-0.5 pphwm self-crosslinking monomer.

6. The polymer composition as claimed in Claim 1, wherein said self-crosslinking monomer is N-methylolacrylamide.

7. The polymer composition as claimed in Claim 1, wherein said at least one α-olefin is ethylene.

8. The polymer composition as claimed in Claim 1, wherein said at least one ester of ethylenically unsaturated carboxylic acids is an alkyl (meth) acrylate.

9. The polymer composition as claimed in Claim 8, wherein said alkyl (meth) acrylate is selected from C₁-C₁₂ alkyl (meth)acrylates.

10. The polymer composition as claimed in Claim 9, wherein said alkyl (meth)acrylate is butyl acrylate.

11. A fibrous product comprising:
a) a fibrous substrate selected from woven or nonwoven products including textiles, apparel in general, papers, scrim, engineered fabrics, glass or other mineral fibers, roofing or flooring materials; and
b) a binder resin comprising a copolymer obtainable by reacting (i) 5-95 pphwm of vinyl acetate; (ii) 95-5 pphwm of at least one vinyl ester of α-monosubstituted fatty acids and (iii) 10-0.1 pphwm a self-crosslinking monomer and (iv) optionally 35-5 pphwm of at least one α-olefin and/or 20-5 pphwm of at least one ester of ethylenically unsaturated carboxylic acids.

12. The fibrous product as claimed in Claim 11, Therein the vinyl ester of α-monosubstituted fatty acid is vinyl 2-ethyl hexanoate.

13. The fibrous product as claimed in Claim 11, wherein said self-crosslinking monomer is N-methylolacrylamide.

14. The fibrous product as claimed in Claim 11, wherein said at least one ester of ethylenically unsaturated carboxylic acids is an alkyl (meth) acrylate.

15. The fibrous product as claimed in Claim 14, wherein said alkyl (meth)acrylate is butyl acrylate.

## Patentansprüche

1. Polymerzusammensetzung, die als Bindeharz für faserige Substrate, wie Gewebe oder Vliesstoffe einschließlich Textilien, Bekleidung im Allgemeinen, Papieren, Gitterstoffen, technischer Textilwaren, Glas oder anderen Mineralfasern, Bedachungs- oder Bodenbelagsmaterialien, geeignet ist, wobei die Polymerzusammensetzung ein Copolymer umfasst, das erhältlich ist durch Umsetzen von:
a) 5-95 pphwm Vinylacetat; und
b) 95-5 pphwm wenigstens eines Vinylesters von α-monosubstituierten Fettsäuren; und
c) 10-0,1 pphwm eines selbstvernetzenden Monomers; und gegebenenfalls
d) 35-5 pphwm wenigstens eines α-Olefins; und/oder
e) 45-5 pphwm wenigstens eines Esters von ethylenisch ungesättigten Carbonsäuren; und/oder
f) anderen Comonomeren.

2. Polymerzusammensetzung gemäß Anspruch 1, die ein Copolymer umfasst, das durch Umsetzen von 30-95 pphwm Vinylacetat erhältlich ist.

3. Polymerzusammensetzung gemäß Anspruch 1, die ein Copolymer umfasst, das durch Umsetzen von 60-8 pphwm wenigstens eines Vinylesters von αmonosubstituierten Fettsäuren erhältlich ist.

4. Polymerzusammensetzung gemäß Anspruch 1, wobei es sich bei dem Vinylester einer α-monosubstituierten Fettsäure um Vinyl-2-ethylhexanoat handelt.

5. Polymerzusammensetzung gemäß Anspruch 1, wobei das Copolymer durch Umsetzen von 8-0,5 pphwm selbstvernetzendem Monomer erhältlich ist.

6. Polymerzusammensetzung gemäß Anspruch 1, wobei es sich bei dem selbstvernetzenden Monomer um N-Methylolacrylamid handelt.

7. Polymerzusammensetzung gemäß Anspruch 1, wobei es sich bei dem wenigstens einen α-Olefin um Ethylen handelt.

8. Polymerzusammensetzung gemäß Anspruch 1, wobei es sich bei dem wenigstens einen Ester von ethylenisch ungesättigten Carbonsäuren um ein Alkyl(meth)acrylat handelt.

9. Polymerzusammensetzung gemäß Anspruch 8, wobei das Alkyl(meth)-acrylat aus C₁-C₁₂-Alkyl(meth)acrylaten ausgewählt ist.

10. Polymerzusammensetzung gemäß Anspruch 9, wobei es sich bei dem Alkyl(meth)acrylat um Butylacrylat handelt.

11. Faseriges Produkt, umfassend:
a) ein faseriges Substrat, das aus Geweben oder Vliesstoffen einschließlich Textilien, Bekleidung im Allgemeinen, Papieren, Gitterstoffen, technischer Textilwaren, Glas oder anderen Mineralfasern, Bedachungs- oder Bodenbelagsmaterialien ausgewählt ist; und
b) ein Bindeharz, das ein Copolymer umfasst, das erhältlich ist durch Umsetzen von (i) 5-95 pphwm Vinylacetat; (ii) 95-5 pphwm wenigstens eines Vinylesters von α-monosubstituierten Fettsäuren; und (iii) 10-0,1 pphwm eines selbstvernetzenden Monomers; und (iv) gegebenenfalls 35-5 pphwm wenigstens eines α-Olefins und/oder 20-5 pphwm wenigstens eines Esters von ethylenisch ungesättigten Carbonsäuren.

12. Faseriges Produkt gemäß Anspruch 11, wobei es sich bei dem Vinylester einer α-monosubstituierten Fettsäure um Vinyl-2-ethylhexanoat handelt.

13. Faseriges Produkt gemäß Anspruch 11, wobei es sich bei dem selbstvernetzenden Monomer um N-Methylolacrylamid handelt.

14. Faseriges Produkt gemäß Anspruch 11, wobei es sich bei dem wenigstens einen Ester von ethylenisch ungesättigten Carbonsäuren um ein Alkyl(meth)acrylat handelt.

15. Faseriges Produkt gemäß Anspruch 14, wobei es sich bei dem Alkyl(meth)acrylat um Butylacrylat handelt.

## Revendications

1. Composition de polymère, appropriée en tant que liant résineux pour des substrats fibreux comme des produits tissés ou non-tissés, y compris les textiles, articles d'habillement en général, papiers, canevas, tissus techniques, articles en fibres de verre ou autres fibres minérales, et matériaux pour toitures ou sols, laquelle composition de polymère comprend un copolymère que l'on peut obtenir en faisant réagir :
a) de 5 à 95 ppcpm d'acétate de vinyle ;
b) de 95 à 5 ppcpm d'au moins un ester de vinyle d'acide gras à substituant unique en position alpha ;
c) et de 10 à 0,1 ppcpm d'un monomère auto-réticulant ;
et en option :
d) 35 à 5 ppcpm d'au moins une alpha-oléfine ;
e) et/ou 45 à 5 ppcpm d'au moins un ester d'acide carboxylique à insaturation éthylénique ;
f) et/ou d'autres comonomères.

2. Composition de polymère conforme à la revendication 1, qui comprend un copolymère que l'on peut obtenir en faisant réagir de 30 à 95 ppcpm d'acétate de vinyle.

3. Composition de polymère conforme à la revendication 1, qui comprend un copolymère que l'on peut obtenir en faisant réagir de 60 à 8 ppcpm d'au moins un ester de vinyle d'acide gras à substituant unique en position alpha.

4. Composition de polymère conforme à la revendication 1, dans laquelle l'ester de vinyle d'acide gras à substituant unique en position alpha est du 2-éthyl-hexanoate de vinyle.

5. Composition de polymère conforme à la revendication 1, dans laquelle le copolymère est un copolymère que l'on peut obtenir en faisant réagir de 8 à 0,5 ppcpm d'un monomère auto-réticulant.

6. Composition de polymère conforme à la revendication 1, dans laquelle ledit monomère auto-réticulant est du N-(hydroxy-méthyl)-acrylamide.

7. Composition de polymère conforme à la revendication 1, dans laquelle ladite alpha-oléfine au nombre d'au moins une est de l'éthylène.

8. Composition de polymère conforme à la revendication 1, dans laquelle ledit ester d'acide carboxylique à insaturation éthylénique au nombre d'au moins un est un acrylate ou méthacrylate d'alkyle.

9. Composition de polymère conforme à la revendication 8, dans laquelle ledit acrylate ou méthacrylate d'alkyle est choisi parmi les acrylates et méthacrylates d'alkyle en C₁₋₁₂.

10. Composition de polymère conforme à la revendication 9, dans laquelle ledit acrylate ou méthacrylate d'alkyle est de l'acrylate de butyle.

11. Produit fibreux comprenant :
a) un substrat fibreux choisi parmi les produits tissés ou non-tissés, y compris les textiles, articles d'habillement en général, papiers, canevas, tissus techniques, articles en fibres de verre ou autres fibres minérales, et matériaux pour toitures ou sols ;
b) et un liant résineux comprenant un copolymère que l'on peut obtenir en faisant réagir :
i) de 5 à 95 ppcpm d'acétate de vinyle,
ii) de 95 à 5 ppcpm d'au moins un ester de vinyle d'acide gras à substituant unique en position alpha,
iii) et de 10 à 0,1 ppcpm d'un monomère auto-réticulant ;
iv) et en option, 35 à 5 ppcpm d'au moins une alpha-oléfine, et/ou 20 à 5 ppcpm d'au moins un ester d'acide carboxylique à insaturation éthylénique.

12. Produit fibreux conforme à la revendication 11, dans lequel l'ester de vinyle d'acide gras à substituant unique en position alpha est du 2-éthyl-hexanoate de vinyle.

13. Produit fibreux conforme à la revendication 11, dans lequel ledit monomère auto-réticulant est du N-(hydroxy-méthyl)-acrylamide.

14. Produit fibreux conforme à la revendication 11, dans lequel ledit ester d'acide carboxylique à insaturation éthylénique au nombre d'au moins un est un acrylate ou méthacrylate d'alkyle.

15. Produit fibreux conforme à la revendication 14, dans lequel ledit acrylate ou méthacrylate d'alkyle est de l'acrylate de butyle.
